(19) Europäisches Patentamt
European Patent Office
Office européen des brevets

(11) **EP 3 064 744 B1**

(12) **EUROPÄISCHE PATENTSCHRIFT**

(45) Veröffentlichungstag und Bekanntmachung des Hinweises auf die Patenterteilung:
**22.11.2017 Patentblatt 2017/47**

(51) Int Cl.:
***F02C 7/00*** *(2006.01)* ***G05B 23/02*** *(2006.01)*

(21) Anmeldenummer: **15157614.7**

(22) Anmeldetag: **04.03.2015**

(54) **DIAGNOSE VON GASTURBINEN-FLUGTRIEBWERKEN**

DIAGNOSIS OF GAS TURBINE AIRCRAFT ENGINES

DIAGNOSTIC DE GROUPES TURBOMOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.09.2016 Patentblatt 2016/36**

(73) Patentinhaber: **MTU Aero Engines AG**
**80995 München (DE)**

(72) Erfinder:
• **Kando, André**
**85221 Dachau (DE)**
• **Abdullahi, Hassan**
**85221 Dachau (DE)**
• **Tsalavoutas, Anastasios**
**16122 Kaisariani / Athen (GR)**
• **Speer, Thomas**
**85757 Karlsfeld (DE)**

(56) Entgegenhaltungen:
**EP-A2- 2 256 319     US-A1- 2007 124 113**
**US-A1- 2012 041 575**

**Beschreibung**

Die Arbeiten, die zu dieser Erfindung geführt haben, wurden im Zuge des Siebten Rahmenprogramms der Europäischen Union (RP7/2007-2013, E-BREAK) gefördert.

Die vorliegende Erfindung betrifft ein Verfahren und ein System zur wenigstens teilweise automatisierten Diagnose von Gasturbinen-Flugtriebwerken sowie ein Computerprogrammprodukt zur Durchführung des Verfahrens.

Um möglichst frühzeitig Schäden erkennen und entsprechende Maßnahmen, insbesondere Wartungen bzw. Reparaturen, einleiten zu können, ist es nach betriebsinterner Praxis bekannt, Ist-Parameterwerte von Gasturbinen-Flugtriebwerken zu analysieren.

In Dokument US2007/0124113 A1 wird ein Verfahren zur automatisierten Fehlererkennung beschrieben.

Eine Aufgabe einer Ausführung der vorliegenden Erfindung ist es, die Diagnose von Gasturbinen-Flugtriebwerken zu verbessern.

Diese Aufgabe wird durch ein Verfahren mit den Merkmalen des Anspruchs 1 gelöst. Ansprüche 13,14 stellen ein System bzw. Computerprogrammprodukt zur Durchführung eines hier beschriebenen Verfahrens unter Schutz. Vorteilhafte Ausführungsformen der Erfindung sind Gegenstand der Unteransprüche.

Nach einem Aspekt der vorliegenden Erfindung umfasst ein Verfahren zur vollständig oder teilweise automatisierten Diagnose von Gasturbinen-Flugtriebwerken die Schritte:

- Erfassen von Ist-Parameterwerten eines Gasturbinen-Flugtriebwerks für mehrere Betriebsabschnitte;
- Ermitteln von Abweichungen dieser Ist-Parameterwerten von theoretischen Parameterwerten, insbesondere theoretischen Soll-Parameterwerten; und
- Ermitteln von Schadensbildwahrscheinlichkeiten auf Basis einer Ähnlichkeit wenigstens einer ermittelten Abweichung, insbesondere auf Basis einer Änderung zwischen ermittelten Abweichungen, zu Abweichungsmustern unterschiedlicher bekannter Schadensbilder.

Auf Basis solcherart ermittelter Schadensbildwahrscheinlichkeiten können in einer Ausführung vorteilhaft entsprechende Maßnahmen, insbesondere Wartungen, insbesondere Reparaturen, empfohlen und/oder eingeleitet werden.

Schadensbilder umfassen in einer Ausführung ein oder mehrere Bauteile, insbesondere ein oder mehrere Baugruppen mit je mehreren Bauteilen, des Gasturbinen-Flugtriebwerks, beispielsweise ein(e) Leit- und/oder Laufschaufel(gitter), eine oder mehrere Verdichter- und/oder Turbinenstufen des Gasturbinen-Flugtriebwerks oder dergleichen, und/oder einen oder mehrere Fehler, insbesondere der bzw. an den Bauteile(n) bzw. -gruppe(n), beispielsweise eine wenigstens teilweise zerstörte Schaufelblattfläche, einen Defekt einer Schaufelverstellung, einen Lagerbruch oder dergleichen.

Ein (mehrdimensionaler) Ist-Parameterwert umfasst in einer Ausführung Werte für mehrere unterschiedliche, insbesondere thermodynamische und/oder kinematische, Gasturbinen-Flugtriebwerks(zustands- bzw. -betriebs)parameter, insbesondere einen oder mehrere Drücke, insbesondere vor, in und/oder nach einer oder mehreren Stufen des Gasturbinen-Flugtriebwerks, eine oder mehrere Temperaturen, insbesondere vor, in und/oder nach einer oder mehreren Stufen des Gasturbinen-Flugtriebwerks, einen Kraftstoffverbrauch und/oder - massenstrom, und/oder eine oder mehrere Drehzahlen, insbesondere eines oder mehrerer Rotoren des Gasturbinen-Flugtriebwerks. Entsprechend umfasst ein Ist-Parameterwert in einer Ausführung allgemein einen oder mehrere Zustands- bzw. Betriebsparameter des Gasturbinen-Flugtriebwerks und kann auch als, insbesondere mehrdimensionaler, Ist-Zustandsparameterwert bezeichnet werden.

In einer Ausführung werden Ist-Parameterwerte erfasst, die im Betrieb gemessen und, vorzugsweise drahtlos und/oder internetbasiert, übertragen bzw. empfangen worden sind. In einer Weiterbildung sind erfasste Ist-Parameterwerte für den jeweiligen Betriebsabschnitt über mehrere Messdaten gemittelt und/oder -filtert. Ein Betriebsabschnitt kann insbesondere ein Start, insbesondere einer von mehreren Starts, eine Landung, insbesondere eine von mehreren Landungen, oder ein stationärer bzw. Reiseflug, insbesondere einer von mehreren Reiseflügen, sein. Ein Reiseflug und ein vorhergehender Start und/oder ein darauffolgender weiterer Reiseflug können somit verschiedene Betriebsabschnitte darstellen, für die jeweils Ist-Parameterwerte erfasst werden.

In einer Ausführung werden die theoretischen Parameterwerte auf Basis eines, insbesondere thermodynamischen, Modells des Gasturbinen-Flugtriebwerks ermittelt, welches in einer Weiterbildung erfasste Ist-(Eingangs)Parametwerte auf die theoretischen (Ausgangs)Parameterwerte abbildet:

$$p_{\text{theoretisch, aus}} = M(p_{\text{ist, ein}}, \text{Betriebsabschnitt})$$

Entsprechend umfasst ein theoretischer Parameterwert in einer Ausführung allgemein einen oder mehrere Zustands- bzw. Betriebs-, insbesondere Ausgangsparameter des Gasturbinen-Flugtriebwerksmodells und kann auch als, insbesondere mehrdimensionaler, theoretischer Zustandsparameterwert, insbesondere Ausgangsparameterwert bezeichnet werden.

In einer Weiterbildung ist dieses Modell initial, d.h. vor einem Erst(flug)betrieb und/oder auf Basis erster bzw. ältester Betriebsabschnitte kalibriert. Hierdurch können vorteilhaft Modell- und/oder systematische Fehler reduziert werden. Bei Kalibrieren werden ein oder mehrere Modellparameter angepasst. Zur Unterscheidung von solchen Modellparametern können theoretische bzw. Ist-(Zustands)parameterwerte auch als (theoretische bzw. Ist-)Zustandsvariablen bezeichnet werden.

In einer Ausführung wird für mehrere Betriebsabschnitte jeweils die Abweichung von Ist-(Zustands)Parameterwerten von den theoretischen (Zustands)Parameterwerten ermittelt. Die Abweichungen sind dabei in einer Ausführung jeweils mehrdimensional und umfassen die Abweichungen der Ist- von den theoretischen Werten unterschiedlicher (Zustands)Parameter des Gasturbinen-Flugtriebwerks für den jeweiligen Betriebsabschnitt. In einer Weiterbildung werden die Abweichungen über die Betriebsabschnitte gefiltert bzw. -glättet, insbesondere, um Rauschen zu reduzieren und so die Präzision, Robustheit und/oder Zuverlässigkeit der Diagnose zu verbessern.

In einer Ausführung wird für einen oder mehrere Betriebsabschnitte jeweils die Änderung der ermittelten Abweichung gegenüber einer ermittelten Abweichung eines oder mehrerer früherer Betriebsabschnitte, insbesondere gegenüber einer ermittelten Abweichung eines, insbesondere unmittelbar, vorhergehenden Betriebsabschnitts, ermittelt.

In einer Ausführung wird eine Fehlermeldung generiert, falls eine Abweichung, insbesondere eine oder mehrere ihrer Komponenten, einen, insbesondere komponentenweise, vorgegebenen (Abweichungs)Grenzwert übersteigen.

Hierdurch kann vorteilhaft ein Überschreiten absoluter Grenzen für die Abweichungen detektiert werden.

Zusätzlich oder alternativ wird in einer Ausführung eine Fehlermeldung generiert, falls eine Änderung der Abweichungen, insbesondere eine oder mehrere Komponenten der Änderung, einen, insbesondere komponentenweise, vorgegebenen (Änderungs)Grenzwert übersteigen.

Hierdurch kann vorteilhaft ein Überschreiten relativer Grenzen für die Abweichungen detektiert werden.

Der Betriebsabschnitt, für den die Fehlermeldung generiert wird, oder ein ihm, insbesondere unmittelbar, vorhergehender Betriebsabschnitt wird vorliegend auch als Fehler-Betriebsabschnitt bezeichnet. Aufgrund der Trägheit wird die Fehlermeldung regelmäßig erst für einen Betriebsabschnitt generiert, der demjenigen Betriebsabschnitt, insbesondere unmittelbar, nachfolgt, in dem der Fehler bzw. das Schadenbild aufgetreten bzw. sich in der (Änderung der) Abweichung gezeigt hat.

Nach einem Aspekt der vorliegenden Erfindung werden Schadensbildwahrscheinlichkeiten auf Basis einer Ähnlichkeit wenigstens einer Abweichung zu Abweichungsmustern unterschiedlicher bekannter Schadensbilder ermittelt, insbesondere nur oder auch, falls eine Fehlermeldung generiert wird.

Dabei umfassen in einer Ausführung Abweichungsmuster bekannter Schadensbilder die Abweichungen selber. So kann beispielsweise einer bestimmten Abweichung bestimmter Ist-Parameterwerte von theoretischen, insbesondere modellbasierten, Parameterwerten, ein bestimmtes bekanntes Schadensbild zugeordnet sein bzw. werden. Entsprechend werden in einer Ausführung Schadensbildwahrscheinlichkeiten auf Basis einer Ähnlichkeit einer, insbesondere für einen Fehler-Betriebsabschnitt, ermittelten Abweichung zu Abweichungsmustern unterschiedlicher bekannter Schadensbilder ermittelt.

Zusätzlich oder alternativ können in einer Ausführung Abweichungsmuster bekannter Schadensbilder Änderungen der Abweichung, insbesondere gegenüber wenigstens einer, insbesondere unmittelbar, vorhergehenden Abweichung bzw. gegenüber einer Abweichung wenigstens eines, insbesondere unmittelbar, vorhergehender Betriebsabschnitte, umfassen. So kann beispielsweise einer bestimmten Änderung der Abweichung bestimmter Ist-Parameterwerte gegenüber einer vorhergehenden Abweichung ein bestimmtes bekanntes Schadensbild zugeordnet sein bzw. werden. Entsprechend werden in einer Ausführung Schadensbildwahrscheinlichkeiten auf Basis einer Ähnlichkeit einer Änderung zwischen, insbesondere aufeinanderfolgenden, insbesondere unmittelbar aufeinanderfolgenden, ermittelten Abweichungen zu Abweichungsmustern unterschiedlicher bekannter Schadensbilder ermittelt. Somit werden in dieser Ausführung Schadensbildwahrscheinlichkeiten auf Basis einer Ähnlichkeit zweier ermittelter Abweichungen, nämlich auf Basis einer Änderung zwischen diesen beiden ermittelten Abweichungen, zu Abweichungsmustern unterschiedlicher bekannter Schadensbilder ermittelt.

Die bekannten Schadensbilder und/oder die diesen zugeordneten Abweichungsmuster sind in einer Ausführung in einer Datenbank abgespeichert, welche in einer Weiterbildung auf Basis bekannter Schadensfälle des Gasturbinen-Flugtriebwerks und/oder, insbesondere typ- bzw. baugleicher, weiterer Gasturbinen-Flugtriebwerke, aktualisiert wird. Bei der vorliegenden Erfindung wird zusätzlich auch eine Schadensbildwahrscheinlichkeit für ein unbekanntes Schadensbild bzw. dafür, dass ein unbekanntes Schadensbild vorliegt, ermittelt.

Hierdurch kann vorteilhaft das Risiko einer fehlerhaften Diagnose reduziert werden: werden nur bekannte Schadensbild berücksichtigt und aufgrund der Schadensbildwahrscheinlichkeit das wahrscheinlichste der bekannten Schadensbilder als voraussichtliches Schadensbild angenommen, das einer aktuellen Abweichung, insbesondere Abweichungsänderung, zugrunde liegt bzw. diese verursacht hat, kann dies dazu führen, dass ein unzutreffendes Schadensbild angenommen wird, nur weil dieses wahrscheinlicher ist als andere (noch unwahrscheinlichere) bekannte Schadensbilder. Durch die Ermittlung einer Schadensbildwahrscheinlichkeit für ein unbekanntes Schadensbild kann demgegenüber vorteilhaft erkannt werden, wenn eine aktuelle Abweichung, insbesondere Abweichungsänderung, voraussichtlich auf ein neues, insbesondere in der Datenbank nicht abgespeichertes Schadensbild zurückgeht.

Nach einem Aspekt der vorliegenden Erfindung werden für ein unbekanntes Schadensbild Ursachenwahrscheinlichkeiten auf Basis eines Modells des Gasturbinen-Flugtriebwerks ermittelt.

Das Modell kann dabei insbesondere grundsätzlich dasselbe, hier beschriebene Modell sein, auf dessen Basis die theoretischen Parameterwerte ermittelt werden.

In einer Ausführung wird dieses Modell des Gasturbinen-Flugtriebwerks, auf dessen Basis Ursachenwahrscheinlichkeiten ermittelt werden, vor Ermitteln der Ursachenwahrscheinlichkeiten auf Basis aktueller Ist-Parameterwerte des Gasturbinen-Flugtriebwerks kalibriert, insbesondere kann das Modell, auf dessen Basis die theoretischen Parameterwerte ermittelt werden, auf Basis aktueller Ist-Parameterwerte des Gasturbinen-Flugtriebwerks (re)kalibriert werden.

Durch eine (Re)Kalibrierung auf Basis aktueller Ist-Parameterwerte kann in einer Ausführung vorteilhaft eine Veränderung, insbesondere eine Alterung, des Gasturbinen-Flugtriebwerks berücksichtigt werden. Dies ist insbesondere vorteilhaft, da die Ermittlung von Ursachenwahrscheinlichkeiten deutlich sensitiver bezüglich Modellfehlern ist als die Ermittlung von Schadensbildwahrscheinlichkeiten.

In einer Ausführung umfassen bzw. beinhalten die aktuellen Ist-Parameterwerte, auf deren Basis das Modell zur Ermittlung der Ursachenwahrscheinlichkeiten kalibriert wird, erfasste Ist-Parameterwerte für einen oder mehrere der jüngsten zehn Betriebsabschnitte, insbesondere den oder die Betriebsabschnitte, die dem Betriebsabschnitt, für den eine Fehlermeldung generiert wird, oder dem diesem unmittelbar vorhergehenden Betriebsabschnitt, d.h. dem Fehler-Betriebsabschnitt, insbesondere unmittelbar, vorher- bzw. -ausgehen.

In einer Ausführung werden Ursachenwahrscheinlichkeiten auf Basis von, insbesondere kombinatorischen, (Modell)Parameterwertvariationen des Modells des Gasturbinen-Flugtriebwerks ermittelt. Mit anderen Worten werden Modellparameter, die in einer Ausführung von den theoretischen bzw. Zustandsparametern bzw. -variablen des Modells verschieden, insbesondere verschiedenartig, sind, insbesondere kombinatorisch bzw. einzeln und in unterschiedlichen Kombinationen miteinander, variiert bzw. pertubiert.

Ursachen können in einer Ausführung ebenso wie Schadensbilder ein oder mehrere Bauteile, insbesondere ein oder mehrere Baugruppen mit je mehreren Bauteile, des Gasturbinen-Flugtriebwerks, beispielsweise ein(e) Leit- und/oder Laufschaufel(gitter), eine oder mehrere Verdichter- und/oder Turbinenstufen des Gasturbinen-Flugtriebwerks oder dergleichen, und/oder einen oder mehrere Fehler, insbesondere der bzw. an den Bauteile(n) bzw. -gruppe(n), beispielsweise eine wenigstens teilweise zerstörte Schaufelblattfläche, einen Defekt einer Schaufelverstellung, einen Lagerbruch oder dergleichen, umfassen.

In einer Ausführung werden ein oder mehrere Modellparameter(werte) des Modells, insbesondere einzeln und/oder in einer oder mehreren Kombinationen, insbesondere in Kombinationen von jeweils zwei, jeweils drei und/oder mehr Modellparameter(werte), variiert, insbesondere mit mehreren unterschiedlichen Werten belegt, und ein oder mehrere theoretische bzw. Zustands-, insbesondere Ausgangsparameter- bzw. -variablenwerte des solcherart variierten Modells mit erfassten Ist-Parameterwerten, insbesondere für den Fehler-Betriebsabschnitt bzw. den Betriebsabschnitt, für den die Fehlermeldung generiert worden ist oder den unmittelbar vorhergehenden Betriebsabschnitt, verglichen. Dann werden, insbesondere auf Basis einer Ähnlichkeit der theoretischen Parameterwerte des Modells mit den Ist-Parameterwerten des Fehler-Betriebsabschnitts, Wahrscheinlichkeiten für die Ursache der (Änderung der) Abweichung ermittelt.

Beispielsweise wird ein Modellparameterwert, der von einer Leitschaufelverstellung des Gasturbinen-Flugtriebwerks abhängt, insbesondere diese beschreibt, einzeln und in Kombination mit einem oder mehreren weiteren Modellparameterwerten variiert, die nicht von der Leitschaufelverstellung abhängen. Wenn die solcherart variierten Modelle bzw. deren theoretische Ausgangsparameterwerte jeweils eine höhere Ähnlichkeit mit den erfassten Ist-Parameterwerten des Fehler-Betriebsabschnitts aufweisen als Modelle, in denen der Modellparameterwert, der von einer Leitschaufelverstellung des Gasturbinen-Flugtriebwerks abhängt, nicht variiert ist, kann einem Fehler in der Leitschaufelverstellung eine hohe bzw. höhere Wahrscheinlichkeit zugeordnet werden, Ursache des Schadensbilds bzw. der (Änderung der) Abweichung zu sein.

In einer Ausführung werden einer oder mehrere der Schritte jeweils teilweise oder vollständig automatisiert durchgeführt.

Ein System zur Diagnose von Gasturbinen-Flugtriebwerken nach einem Aspekt der vorliegenden Erfindung ist zur Durchführung eines hier beschriebenen Verfahrens eingerichtet und/oder weist auf:

Mittel zum Erfassen von Ist-Parameterwerten eines Gasturbinen-Flugtriebwerks für mehrere Betriebsabschnitte;
Mittel zum Ermitteln von Abweichungen dieser Ist-Parameterwerten von modellbasierten theoretischen Parameterwerten; und
Mittel zum Ermitteln von Schadensbildwahrscheinlichkeiten auf Basis einer Ähnlichkeit wenigstens einer ermittelten Abweichung, insbesondere auf Basis einer Änderung zwischen ermittelten Abweichungen, zu Abweichungsmustern unterschiedlicher bekannter Schadensbilder.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangs-signale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere wenigstens teilweise automatisiert eine Diagnose eines Gasturbinen-Flugtriebwerks durchführen kann.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:

Fig. 1    ein Verfahren zur Diagnose von Gasturbinen-Flugtriebwerken nach einer Ausführung der vorliegenden Erfindung;

Fig. 2    zwei Komponenten von Abweichungen von Ist-Parameterwerten von theoretischen Parameterwerten; und

Fig. 3    einen Vergleich von Abweichungen mit Abweichungsmustern unterschiedlicher bekannter Schadensbilder.

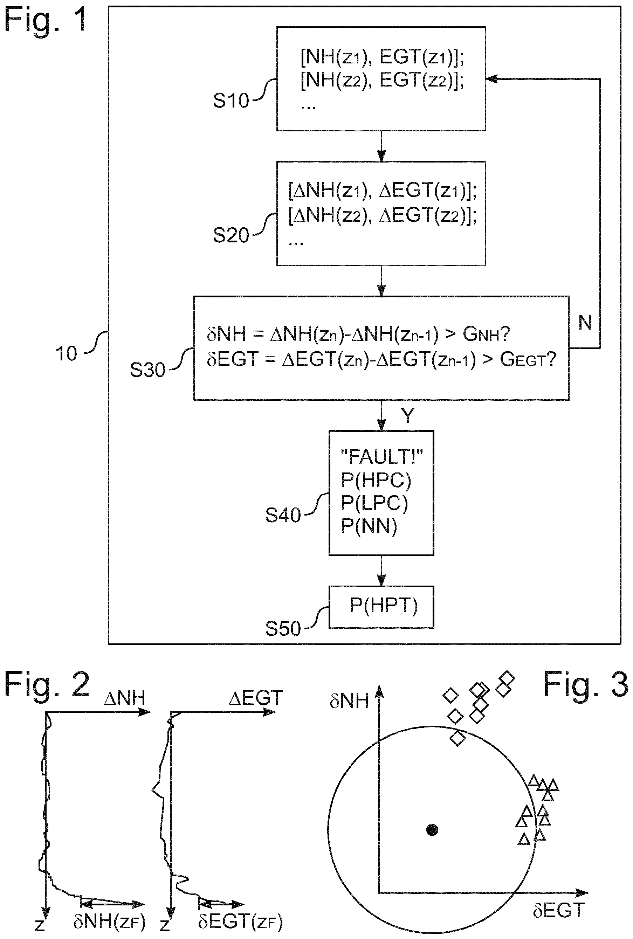

Fig. 1 zeigt ein Verfahren zur Diagnose von Gasturbinen-Flugtriebwerken nach einer Ausführung der vorliegenden Erfindung, welches wenigstens teilweise automatisiert mittels eines Systems nach einer Ausführung der vorliegenden Erfindung in Form eines Computers 10, der ein Medium, insbesondere ein portables oder stationäres Speichermittel, aufweist, auf dem ein entsprechendes Programm gespeichert ist, durchgeführt wird.

In einem ersten Verfahrensschritt S10 werden Ist-(Zustands- bzw. Betriebs)Parameter- bzw.-variablenwerte eines Gasturbinen-Flugtriebwerks für mehrere Betriebsabschnitte $z_1$, $z_2$, .... erfasst.

Diese Ist-Parameterwerte umfassen im Ausführungsbeispiel unter anderem exemplarisch eine Drehzahl NH und eine Gastemperatur EGT einer Gasturbine des Triebwerks. Sie werden im Betrieb fortlaufend, insbesondere periodisch, gemessen, jeweils für verschiedene Betriebsabschnitte, beispielsweise verschiedene Starts, Landungen und/oder Reiseflüge, insbesondere Reiseflugabschnitte, $z_i$ gemittelt, und, insbesondere internetbasiert, an den Computer 10 übertragen, der sie in dieser übertragenen Form in Schritt S10 erfasst.

In einem zweiten Verfahrensschritt S20 werden jeweils Abweichungen $\Delta(z_i)$ von erfassten Ist-Parameterwerten gegenüber diesen entsprechenden theoretischen (Zustands- bzw. Betriebs)Parameterwerten ermittelt. Die Komponenten $\Delta NH = NH - NH_{Modell}$ und $\Delta EGT = EGT - EGT_{Modell}$ der Abweichungen sind exemplarisch in Fig. 2 über den Betriebszuständen z angedeutet.

Die theoretischen Parameterwerte werden hierzu in Schritt S20 auf Basis eines initial kalibrierten thermodynamischen Modells des Gasturbinen-Flugtriebwerks ermittelt. Dieses bildet erfasste Ist-Eingangsparameterwerte, beispielsweise eine Schubanforderung, Höhe, Machzahl und dergleichen, auf zugehörige theoretische (Ausgangs)Parameterwerte, unter anderem die oben genannte Drehzahl $NH_{Modell}$ und Gastemperatur $EGT_{Modell}$ der Gasturbine ab.

In einem Schritt S30 wird eine Fehlermeldung generiert, falls eine Abweichung einen vorgegebenen (absoluten) Grenzwert übersteigt oder eine Änderung $\delta$ einer Abweichung $\Delta(z_n)$ gegenüber einer vorhergehenden Abweichung $\Delta(z_{n-1})$ einen vorgegebenen (relativen) Grenzwert G übersteigt, wie dies in Fig. 2 mit $\delta NH(z_F)$ und $\delta EGT(z_F)$ angedeutet ist. $z_F$ bezeichnet dabei den (Fehler-)Betriebsabschnitt, in dem die Fehlermeldung generiert bzw. die Abweichung $\Delta$ den (absoluten) oder deren Änderung $\delta$ den (relativen) Grenzwert G überschreitet.

Falls eine Fehlermeldung generiert wird (S30: "Y"), werden in einem Schritt S40 Schadensbildwahrscheinlichkeiten P auf Basis einer Ähnlichkeit der ermittelten Änderung $\Delta$ oder der Änderung $\delta$ der ermittelten Abweichung $\Delta$ gegenüber einer vorhergehenden Abweichung zu Abweichungsmustern unterschiedlicher bekannter Schadensbilder ermittelt. Andernfalls (S30: "N") kehrt das Verfahren zu Schritt S10 zurück.

Fig. 3 illustriert exemplarisch einen Vergleich der Änderungen $\delta$ der Abweichungen $\Delta$ mit Abweichungsmustern ($\delta NH$, $\delta EGT$) unterschiedlicher bekannter Schadensbilder. Dabei sind mit Rauten Änderungen von Abweichungen in den Parameterwerten NH und EGT angedeutet, die in einer Datenbank des Computers 10 einem bekannten ersten Schadensbild, beispielsweise einem Schaden in einem Hochdruckverdichter ("HPC") der Gasturbine des Flugtriebwerks, zugeordnet sind. Mit Dreiecken sind hingegen Änderungen von Abweichungen in den Parameterwerten NH und EGT angedeutet, die einem bekannten zweiten Schadensbild, beispielsweise einem Schaden in einem Niederdruckverdichter ("LPC") der Gasturbine des Flugtriebwerks, zugeordnet sind.

Mittels eines an sich bekannten k-Nearest-Neighbor-Verfahrens wird jeweils entsprechend einer Anzahl von Werten eines Abweichungsmusters eines bekannten Schadensbilds, die innerhalb eines vorgegebenen Gebiets um die aktuelle, in Fig. 3 durch einen ausgefüllten Kreis angedeutete, (Änderung der) Abweichung liegt, eine Schadensbildwahrscheinlichkeit für dieses Schadensbild ermittelt.

Im Ausführungsbeispiel wird exemplarisch für das bekannte Schadensbild "Schaden im Hochdruckverdichter" eine Wahrscheinlichkeit P(HPC) von 0,1 ermittelt, für das bekannte Schadensbild "Schaden im Niederdruckverdichter" eine Wahrscheinlichkeit P(LPC) von 0,3.

Zusätzlich wird in Schritt S40 eine Schadensbildwahrscheinlichkeit P(NN) für ein unbekanntes Schadensbild ("NN") ermittelt. Diese beträgt im Ausführungsbeispiel aufgrund der großen Entfernung zu den bekannten Schadensbildern HPC, LPC 0,5.

Zur Zeitersparnis wird hierzu parallel in Schritt S40 das thermodynamische Modell rekalibriert, indem seine (Modell)Parameterwerte derart angepasst werden, dass es die letzten bzw. jüngsten Ist-(Zustands)Parameterwerte vor dem Fehler-Betriebszustand $z_F$ am besten abbildet.

In einem Schritt S50 werden für das unbekannte Schadensbild kombinatorisch Ursachenwahrscheinlichkeiten auf Basis des rekalibrierten Modells des Gasturbinen-Flugtriebwerks ermittelt.

Hierzu werden (Modell)Parameter des Modells einzeln und in Kombination variiert und (Zustands-, insbesondere Ausgangs)Parameterwerte dieses variierten Modells jeweils mit den entsprechenden erfassten Ist-Parameterwerten des Fehler-Betriebszustands verglichen. Modellparameter, deren Variation eine höhere Ähnlichkeit mit den Ist-Parameterwerten des Fehler-Betriebszustands ergibt, wird eine höhere Ursachenwahrscheinlichkeit zugeordnet.

Im Ausführungsbeispiel bedingt beispielsweise eine Variation eines Modellparameters, der eine Funktionalität einer aktiven Spaltregelung in einer Hochdruckturbine ("HPT") der Gasturbine des Flugtriebwerks beschreibt bzw. mit dieser zusammenhängt, stets eine erhöhte Ähnlichkeit. Entsprechend wird in Schritt S60 für einen Fehler in der aktiven Spaltregelung der Hochdruckturbine eine höchste Ursachenwahrscheinlichkeit P(HPT) ermittelt.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

Bezugszeichenliste

| 10 | Computer |
|---|---|
| NH | Drehzahl (theoretischer/Ist-Parameter) |
| EGT | Temperatur (theoretischer/Ist-Parameter) |
| $\Delta$ | Abweichung |
| $\delta$ | Änderung zwischen Abweichungen |
| $z_1, z_2$ | Betriebsabschnitt |
| $z_F$ | Fehler-Betriebsabschnitt |

**Patentansprüche**

1. Verfahren zur wenigstens teilweise automatisierten Diagnose von Gasturbinen-Flugtriebwerken, mit den Schritten:

     Erfassen (S10) von Ist-Parameterwerten (NH, EGT) eines Gasturbinen-Flugutriebwerks für mehrere Betriebsabschnitte ($z_1$, $z_2$,...);
     Ermitteln (S20) von Abweichungen ($\Delta$NH, $\Delta$EGT) dieser Ist-Parameterwerte von theoretischen Parameterwerten;
     Ermitteln (S40) von Schadensbildwahrscheinlichkeiten (P(HPC), P(LPC)) auf Basis einer Ähnlichkeit wenigstens einer ermittelten Abweichung, insbesondere auf Basis einer Änderung ($\delta$) zwischen ermittelten Abweichungen ($\Delta$), zu Abweichungsmustern ($\delta$NH, $\delta$EGT) unterschiedlicher bekannter Schadensbilder ; **gekennzeichnet durch** den weiteren Schritt:

     Ermitteln (S40) einer Schadensbildwahrscheinlichkeit (P(NN)) für ein unbekanntes Schadensbild.

2. Verfahren nach einem der vorhergehenden Ansprüche, **dadurch gekennzeichnet, dass** für ein unbekanntes Schadensbild Ursachenwahrscheinlichkeiten (P(LPT)) auf Basis eines Modells des Gasturbinen-Flugtriebwerks ermittelt werden (S50).

3. Verfahren nach dem vorhergehenden Anspruch, **dadurch gekennzeichnet, dass** Ursachenwahrscheinlichkeiten auf Basis von, insbesondere kombinatorischen, Parameterwertvariationen des Modells des Gasturbinen-Flugtriebwerks ermittelt werden.

4. Verfahren nach einem der beiden vorhergehenden Ansprüche, **dadurch gekennzeichnet, dass** das Modell des Gasturbinen-Flugtriebwerks vor Ermitteln der Ursachenwahrscheinlichkeiten auf Basis aktueller Ist-Parameterwerte des Gasturbinen-Flugtriebwerks kalibriert wird (S40).

5. Verfahren nach dem vorhergehenden Anspruch, **dadurch gekennzeichnet, dass** die aktuellen Ist-Parameterwerte erfasste Ist-Parameterwerte für wenigstens einen der jüngsten zehn Betriebsabschnitte umfassen.

6. Verfahren nach einem der vorhergehenden Ansprüche, **dadurch gekennzeichnet, dass** eine Fehlermeldung ("FAULT!") generiert wird (S40), falls eine Abweichung und/oder Änderung von Abweichungen, einen vorgegebenen Grenzwert ($G_{NG}$, $G_{EGT}$) übersteigt.

7. Verfahren nach einem der vorhergehenden Ansprüche, **dadurch gekennzeichnet, dass** Ist-Parameterwerte, insbesondere im Betrieb gemessene und/oder gemittelte und/oder intemetbasiert übertragene, Werte für unterschiedliche, insbesondere thermodynamische und/oder kinematische, Gasturbinen-Flugtriebwerksparameter, insbesondere Drücke, Temperaturen (EGT), Kraftstoffmassenströme und/oder Drehzahlen (NH) umfassen.

8. Verfahren nach einem der vorhergehenden Ansprüche **dadurch gekennzeichnet, dass** Schadensbilder und/oder Ursachen Bauteile, insbesondere Baugruppen, und/oder Fehler umfassen.

9. Verfahren nach einem der vorhergehenden Ansprüche, **dadurch gekennzeichnet, dass** Abweichungen von Ist-Parameterwerten von theoretischen Parameterwerten gefiltert werden.

10. Verfahren nach einem der vorhergehenden Ansprüche, **dadurch gekennzeichnet, dass** theoretische Parameterwerte auf Basis eines, insbesondere initial kalibrierten, Modells des Gasturbinen-Flugtriebwerks ermittelt werden (S20).

11. Verfahren nach einem der vorhergehenden Ansprüche, **dadurch gekennzeichnet, dass** die bekannten Schadensbilder in einer Datenbank (1) abgespeichert sind.

12. Verfahren nach einem der vorhergehenden Ansprüche, **dadurch gekennzeichnet, dass** einer oder mehrere der Schritte (S10-S50) wenigstens teilweise automatisiert durchgeführt werden.

13. System (10) zur Diagnose von Gasturbinen-Flugtriebwerken, das zur Durchführung eines Verfahrens nach einem der vorhergehenden Ansprüche eingerichtet ist und/oder aufweist:

Mittel (10) zum Erfassen von Ist-Parameterwerten (NH, EGT) eines Gasturbinen-Flugtriebwerks für mehrere Betriebsabschnitte ($z_1$, $z_2$,...);
Mittel (10) zum Ermitteln von Abweichungen ($\Delta NH$, $\Delta EGT$) dieser Ist-Parameterwerten von theoretischen Parameterwerten;
Mittel (10) zum Ermitteln (S40) von Schadensbildwahrscheinlichkeiten (P(HPC), P(LPC)) auf Basis einer Ähnlichkeit wenigstens einer ermittelten Abweichung, insbesondere auf Basis einer Änderung ($\delta$) zwischen ermittelten Abweichungen ($\Delta$), zu Abweichungsmustern ($\delta NH$, $\delta EGT$) unterschiedlicher bekannter Schadensbilder; und
Mittel (10) zum Ermitteln (S40) einer Schadensbildwahrscheinlichkeit (P(NN)) für ein unbekanntes Schadensbild.

14. Computerprogrammprodukt mit einem Programmcode, der auf einem von einem Computer (10) lesbaren Medium gespeichert ist, eingerichtet zur Durchführung eines Verfahrens nach einem der vorhergehenden Ansprüche,

**Claims**

1. A method for the at least partially automated diagnosis of gas turbine aircraft engines, having the steps:

detecting (S10) actual parameter values (NH, EGT) of a gas turbine aircraft engine for several operational sections ($z_1$,$z_2$, ...);
ascertaining (S20) deviations ($\Delta NH$, $\Delta EGT$) of these actual parameter values from theoretical parameter values;
ascertaining (S40) failure probabilities (P(HPC), P(LPC)) on the basis of a similarity of at least one ascertained deviation, in particular on the basis of a change ($\delta$) between ascertained deviations ($\Delta$), to deviation patterns ($\delta NH$, $\delta EGT$) of various known failures; **characterized by** the further step:

ascertaining (S40) a failure probability (P(NN)) for an unknown failure.

2. The method according to one of the preceding claims, **characterized in that** cause probabilities (P(LPT)) for an unknown failure are ascertained (S50) on the basis of a model of the gas turbine aircraft engine.

3. The method according to the preceding claim, **characterized in that** cause probabilities are ascertained on the basis of variations, in particular combinatorial variations, of parameter values of the model of the gas turbine aircraft engine.

**4.** The method according to one of the two preceding claims, **characterized in that** the model of the aircraft gas turbine engine is calibrated (S40) on the basis of current actual parameter values of the gas turbine aircraft engine before ascertaining the cause probabilities,

**5.** The method according to the preceding claim, **characterized in that** the current actual parameter values include detected actual parameter values for at least one of the most recent ten operational sections.

**6.** The method according to one of the preceding claims, **characterized in that** an error message ("FAULT!") is generated (S40) in the event that a deviation and/or change in deviations exceeds a predetermined threshold value ($G_{NG}$, $G_{EGT}$).

**7.** The method according to one of the preceding claims, **characterized in that** actual parameter values include in particular values measured during operation and/or averaged values and/or values transmitted via the internet, for various gas turbine aircraft engine parameters, in particular thermodynamic and/or kinematic parameters, in particular pressures, temperatures (EGT), fuel mass flows, and/or rotational speeds (NH).

**8.** The method according to one of the preceding claims, **characterized in that** failures and/or causes include components, in particular sub-assemblies, and/or defects.

**9.** The method according to one of the preceding claims, **characterized in that** deviations of actual parameter values from theoretical parameter values are filtered,

**10.** The method according to one of the preceding claims, **characterized in that** theoretical parameter values are ascertained (S20) on the basis of a model, in particular an initially calibrated model, of the gas turbine aircraft engine.

**11.** The method according to one of the preceding claims, **characterized in that** the known failures are stored in a database (1).

**12.** The method according to one of the preceding claims, **characterized in that** one or more of steps (S10-S50) is carried out in an at least partially automated manner.

**13.** A system (10) for diagnosing gas turbine aircraft engines which is configured to carry out a method according to one of the preceding claims and/or has:

means (10) for detecting actual parameter values (NH, EGT) of a gas turbine aircraft engine for several operational sections ($z_1$, $z_2$, ...);
means (10) for ascertaining deviations ($\Delta NH$, $\Delta EGT$) of these actual parameter values from theoretical parameter values;
means (10) for ascertaining (S40) failure probabilities (P(HPC), P(LPC)) on the basis of a similarity of at least one ascertained deviation, in particular on the basis of a change ($\delta$) between ascertained deviations ($\Delta$), to deviation patterns ($\delta NH$, $\delta EGT$) of various known failures; and
means (10) for ascertaining (S40) a failure probability (P(NN)) for an unknown failure.

**14.** A computer program product with a program code which is stored on a medium which can be read by a computer (10), configured to carry out method according to one of the preceding claims.

## Revendications

**1.** Procédé de diagnostic au moins partiellement automatisé de groupes motopropulseurs à turbine à gaz, comprenant les étapes suivantes :

à détection (S10) de valeurs paramétriques réelles (NH, EGT) d'un groupe motopropulseur à turbine à gaz pour une pluralité de parties fonctionnelles (z1, z2, ...);
la détermination (S20) d'écarts ($\Delta NH$, $\Delta EGT$) de ces valeurs paramétriques réelles par rapport à des valeurs paramétriques théoriques ; et
la détermination (S40) de probabilités d'images d'endommagements (P(HPC), P(LPC)) sur la base d'une similitude d'au moins un écart déterminé, en particulier sur la base d'une variation ($\delta$) entre des écarts déterminés ($\Delta$) par rapport à des modèles d'écart ($\delta NH$, $\delta EGT$) de différentes images d'endommagements connues, **caractérisé par** les autres étapes suivantes :

la détermination (S40) d'une probabilité d'images d'endommagements (P(NN)) pour une image d'endommagement inconnue.

**2.** Procédé selon l'une des revendications précédentes, **caractérisé en ce que**, pour une image d'endommagement inconnue, des probabilités de causes (P(LPT)) sont déterminées sur la base d'un modèle du groupe motopropulseur à turbine à gaz (S50).

**3.** Procédé selon l'une des revendications précédentes, **caractérisé en ce que** des probabilités de causes sont déterminées sur la base de variations de valeurs combinatoires, en particulier de variations de valeurs paramétriques, du modèle du groupe motopropulseur à turbine à gaz.

4. Procédé selon à revendication 1, **caractérisé en ce que** le modèle du groupe motopropulseur à turbine à gaz est étalonné (S40) avant la détermination des probabilités de causes sur la base de valeurs paramétriques réels actuelles du groupe motopropulseur à turbine à gaz.

5. Procédé selon la revendication précédente, **caractérisé en ce que** les valeurs paramétriques réels actuelles comprennent des valeurs paramétriques réelles détectées pour l'au moins une des dix parties fonctionnelles les plus récentes.

6. Procédé selon l'une des revendications précédentes, **caractérisé en ce qu'**un message de défaut (« FAUT ») est généré (S40) si un écart et/ou une variation d'écart dépasse une valeur limite prédéterminée ($G_{NG}$, $G_{EGT}$).

7. Procédé selon l'une des revendications précédentes, **caractérisé en ce que** des valeurs paramétriques réelles comprennent des valeurs en particulier mesurées en fonctionnement et/ou moyennées et/ou basées sur Internet, pour différents paramètres de groupe motopropulseur de turbine à gaz, en particulier thermodynamiques et/ou cinématiques, en particulier des pressions, des températures (EGT), des débits massiques de carburant et/ou les vitesses de rotation (NH).

8. Procédé selon l'une des revendications précédentes, **caractérisé en ce que** des causes et/ou des images d'endommagements comprennent des composants, en particulier des modules, et/ou des défauts.

9. Procédé selon l'une des revendications précédentes, **caractérisé en ce que** des écarts de valeurs paramétriques réelles par rapport à des valeurs paramétriques théoriques sont filtrés.

10. Procédé selon l'une des revendications précédentes, **caractérisé en ce que** des valeurs paramétriques théoriques sont déterminées (S20) sur la base d'un modèle, en particulier initialement étalonné, du groupe motopropulseur à turbine à gaz.

11. Procédé selon l'une des revendications précédentes, **caractérisé en ce que** les images d'endommagements connues sont stockées dans une base de données (1).

12. Procédé selon l'une des revendications précédentes, **caractérisé en ce qu'**une ou plusieurs des étapes (S10-S50) sont effectuées de manière au moins partiellement automatisée,

13. Système (10) de diagnostic de groupes motopropulseurs à turbine à gaz, qui est adapté mettre en oeuvre un procédé selon l'une des revendications précédentes et/ou qui comporte :

    des moyens (10) de détection de valeurs paramétriques réelles (NH, EGT) d'un groupe motopropulseur à turbine à gaz pour une pluralité de parties fonctionnelles ($z_1$, $z_2$, ...) ;
    des moyens (10) de détermination d'écarts ($\Delta NH$, $\Delta EGT$) de ces valeurs paramétriques réelles par rapport à des valeurs paramétriques théoriques ; et
    des moyens (10) de détermination (S40) de probabilités d'images d'endommagements (P(HPC), P(LPC)) sur la base d'une similitude d'au moins un écart déterminé, en particulier sur la base d'une variation (5) entre des écarts déterminés ($\Delta$) par rapport à des modèles d'écart ($\delta NH$, $\delta EGT$) de différentes images d'endommagements connues,
    des moyens (10) de détermination (S40) d'une probabilité d'images d'endommagements (P(NN)) pour une image d'endommagement inconnue.

14. Logiciel comprenant un code de programme stocké sur un support lisible par un ordinateur (10) et adapté pour mettre en oeuvre un procédé selon l'une des revendications précédentes.

Fig. 1

$$[NH(z_1), EGT(z_1)];$$
$$[NH(z_2), EGT(z_2)];$$
$$...$$

S10

$$[\Delta NH(z_1), \Delta EGT(z_1)];$$
$$[\Delta NH(z_2), \Delta EGT(z_2)];$$
$$...$$

S20

$$\delta NH = \Delta NH(z_n) - \Delta NH(z_{n-1}) > G_{NH}?$$
$$\delta EGT = \Delta EGT(z_n) - \Delta EGT(z_{n-1}) > G_{EGT}?$$

S30

N

Y

"FAULT!"
P(HPC)
P(LPC)
P(NN)

S40

P(HPT)

S50

10

Fig. 2

$\Delta NH$ $\Delta EGT$

z $\delta NH(z_F)$ z $\delta EGT(z_F)$

$\delta NH$ Fig. 3

$\delta EGT$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070124113 A1